Europäisches Patentamt

(19) European Patent Office

Office européen des brevets

(11) Numéro de publication: **0 1 1 6 2 4 6**
**B1**

(12) **FASCICULE DE BREVET EUROPEEN**

(45) Date de publication du fascicule du brevet:
19.02.86

(51) Int. Cl.⁴: **B 01 J 8/00,** B 65 G 69/04

(21) Numéro de dépôt: 83402460.6

(22) Date de dépôt: **19.12.83**

(54) **Dispositif de remplissage d'une enceinte avec un solide sous forme particulaire.**

(30) Priorité: **30.12.82 FR 8222064**

(43) Date de publication de la demande:
**22.08.84 Bulletin 84/34**

(45) Mention de la délivrance du brevet:
**19.02.86 Bulletin 86/8**

(84) Etats contractants désignés:
**AT BE DE FR GB IT NL SE**

(56) Documents cités:
**WO - A - 81/02565**
**WO - A - 82/03026**
**FR - A - 2 431 449**
**FR - A - 2 436 729**
**US - A - 2 423 411**

(73) Titulaire: **COMPAGNIE FRANCAISE DE RAFFINAGE
Société anonyme dite:, 5, rue Michel-Ange,
F-75781 Paris Cedex 16 (FR)**

(72) Inventeur: **Loutaty, Roben, 29, rue Sery, F-76600 Le
Havre (FR)**
Inventeur: **Haquet, Yvon, Les Trois Pierres,
F-76430 Saint-Romain de Colbosc (FR)**

(74) Mandataire: **Jolly, Jean-Pierre et al, Cabinet BROT et
JOLLY 83, rue d'Amsterdam, F-75008 Paris (FR)**

ACTORUM AG

## Description

La présente invention concerne les dispositifs de remplissage d'une enceinte avec un solide sous forme particulaire. Elle se rapporte notamment au chargement d'un silo de stockage avec des grains ou au remplissage d'un réacteur chimique avec un catalyseur en particules de forme quelconque.

On sait que la densité maximum de chargement, c'est-à-dire le rapport maximum entre le poids du solide divisé chargé et le volume disponible de l'enceinte, est obtenue lorsque les particules de solides tombent verticalement dans l'enceinte à remplir, de façon uniforme suivant toute la section transversale de l'enceinte, à la manière d'une pluie, le niveau du solide s'élevant dans ce cas de façon régulière dans l'enceinte, sans accumulation préférentielle en certains emplacements.

Les opérations de chargement d'un réacteur chimique avec un catalyseur en granules, aussi bien que celles d'un silo avec des grains, s'effectuent toutefois classiquement à partir d'une trémie d'alimentation qui est disposée dans un trou d'homme aménagé en général au sommet de l'enceinte, et il est alors très difficile d'obtenir une chute «en pluie» des particules, d'autant qu'il arrive fréquemment que le trou d'homme ou l'orifice de remplissage soit décalé par rapport à l'axe de l'enceinte.

Si le remplissage s'effectue sans utiliser un dispositif auxiliaire de répartition du solide distribué au-dessous de l'orifice d'évacuation de la trémie de remplissage, les particules ne remplissent pas l'enceinte sous forme d'un lit uniforme et régulier, mais, au contraire, y forment un dôme plus ou moins pointu, suivant la nature et la forme des grains.

Pour remédier à cet inconvénient, on a déjà proposé de nombreux dispositifs, faisant appel à des organes distributeurs placés sous l'orifice inférieur de la trémie d'alimentation, qui sont soit des éléments rotatifs (brevet américain N° 3804273) soit des éléments statiques sur lesquels tombent les grains provenant de la trémie et vers lesquels de l'air est parfois soufflé latéralement pour éparpiller les grains (brevet américain N° 4051019).

De tels dispositifs ne permettent pas toujours de distribuer parfaitement, selon une pluie homogène, les particules solides sur toute la surface du lit. La plupart de ces dispositifs présentent l'inconvénient d'utiliser des organes rigides et durs, qui provoquent l'attribution des particules fragiles, et il est en outre parfois difficile, voire impossible, de les introduire dans l'enceinte, en raison de leurs dimensions.

La titulaire a proposé, dans le brevet FR N° 2431449, un dispositif de répartition d'un solide divisé dans une enceinte, comprenant une trémie d'alimentation en solide divisé, une cheminée d'évacuation solidaire de ladite trémie, un organe tournant disposé en aval de l'orifice de sortie de ladite cheminée, et un moyen moteur pour entraîner en rotation ledit organe tournant, l'organe tournant comprenant un arbre, entraîné par le moyen moteur et disposé sensiblement suivant l'axe du conduit d'évacuation, et au moins un élément déflecteur souple de faible dureté, porté par ledit arbre et articulé sur celui-ci de manière à s'en écarter angulairement, sous l'effet de la force centrifuge, lorsqu'il est entraîné en rotation.

Des éléments déflecteurs particulièrement appropriés sont constitués par des lanières souples, en un matériau semi-rigide, de préférence articulées à des niveaux différents sur l'arbre moteur, ces lanières pouvant avoir des dimensions identiques ou non, à un même niveau ou suivant des niveaux différents.

Les lanières ainsi entraînées en rotation sur le trajet des particules sortant de la cheminée d'évacuation dévient radialement ces particules, sans produire un effet d'attrition marqué, en raison de leur dureté modérée. Cette attrition est encore atténuée par le fait que les lanières ne nécessitent, pour assurer une bonne répartition du catalyseur dans le réacteur, qu'une faible vitesse de rotation.

C'est à ce type de dispositif que se rapporte la présente invention, qui vise plus précisément à accroître la rapidité du chargement, tout en maintenant l'homogénéité de la répartition en pluie des particules solides suivant toute la section transversale de l'enceinte à charger, y compris lorsque ladite section transversale n'est pas circulaire, ou lorsque la trémie d'alimentation n'est pas placée au-dessus du centre de cette section.

En effet, alors que le dispositif breveté antérieurement par la titulaire permet d'effectuer aisément un remplissage dense d'enceintes de volume relativement restreint, avec un gain de densité pouvant atteindre plus de 22% par rapport aux techniques usuelles, on observe la formation, en cours de chargement, dans la partie centrale du lit de particules, d'un creux central entouré d'un bourrelet circulaire, lorsqu'on l'applique au remplissage à très grand débit (de 5 à 250 t/h et plus) d'enceintes de très grandes dimensions, pouvant contenir plus de 2000 t de charge. A très gros débit, le lit ne s'élève donc pas régulièrement en cours de chargement, et le fait que sa surface supérieure ne soit pas plane traduit une distribution insatisfaisante des particules par le dispositif répartiteur.

En outre, pour le remplissage d'enceintes à section non circulaire, par exemple de silos à section carrée, comme il en existe en grand nombre, pourvus en outre d'un unique trou de remplissage, souvent décalé par rapport à l'axe de symétrie du silo, il est impératif de pouvoir moduler spécifiquement la répartition des grains entre les différentes zones de l'enceinte, afin d'obtenir le même débit d'alimentation par effet de pluie en tout point de la section transversale.

Jusqu'à ce jour, aucun des procédés de chargement existants ne permettait de remplir correctement ce type d'enceinte à section non circulaire et/ou à orifice de chargement excentré.

En poursuivant ses travaux sur ce type de dispositif, la titulaire a établi qu'il est possible de répondre simultanément à tous ces besoins, tout en permettant un chargement dense à grands débits d'enceintes de très grandes dimensions, en prévoyant dans la trémie de remplissage et/ou dans la cheminée d'évacuation solidaire de cette trémie des orifices latéraux d'évacuation.

Alors qu'une première alimentation s'effectue par la cheminée au-dessus de l'attache des déflecteurs souples par laquelle ceux-ci sont articulés sur l'arbre moteur ou sur un système d'entraînement lié à celui-ci, une ou plusieurs alimentations additionnelles s'effectuent par les orifices de la trémie et de la cheminée, par lesquels les particules solides sont évacuées latéralement et tombent sur des parties des déflecteurs souples éloignées de l'arbre moteur, en accroissant ainsi l'homogénéité de la distribution dans l'enceinte à grande distance de l'axe central.

Un choix judicieux de la ou des ouvertures permet donc de remplir sélectivement et de façon dense et homogène les parties du réacteur qui sont excentrées par rapport à l'axe de la trémie d'alimentation.

On a certes déjà décrit, dans la technique antérieure, par exemple dans US-A-2423411, un appareil pour le transfert de particules d'une enceinte à une autre, dans lequel certaines pièces coniques creuses, servant à l'accumulation des particules, possèdent des orifices latéraux permettant un écoulement directionnel de celles-ci. Ce type d'appareillage vise notamment à permettre le transfert de particules dans des réacteurs chimiques qui ne sont pas à lit fixe, mais, nulle part, dans US-A-2423411, il n'a été proposé de combiner un tel système avec un équipage mobile à lanières souples, entraîné en rotation.

L'invention a par conséquent pour objet un dispositif de remplissage d'une enceinte avec un solide sous forme particulaire, du type comprenant une trémie d'alimentation, une cheminée d'évacuation solidaire de ladite trémie, et un équipage mobile disposé en aval de l'orifice de sortie de ladite cheminée, cet équipage mobile comprenant un arbre entraîné en rotation par un moyen moteur et plusieurs étages d'éléments déflecteurs souples, de faible dureté, articulés sur ledit arbre ou sur une ossature rigidement solidaire de celui-ci, de manière à s'en écarter angulairement sous l'effet de la force centrifuge lorsqu'il est entraîné en rotation, ce dispositif étant caractérisé en ce qu'au moins un orifice d'évacuation en direction desdits éléments déflecteurs est pratiqué dans la paroi latérale de ladite trémie et/ou de ladite cheminée.

Afin de guider l'éjection des particules par le ou les orifices de la cheminée et/ou de la trémie et de les éloigner de l'axe de la cheminée, des volets formant auvents sont avantageusement prévus à la base desdits orifices sur la face externe de la trémie et/ou de la cheminée. Ces volets peuvent, en particulier, former un unique auvent circulaire autour de la cheminée.

On conçoit qu'en répartissant judicieusement ces orifices sur la trémie et la cheminée et en leur donnant des dimensions éventuellement différentes, il est possible d'orienter préférentiellement la distribution latérale de particules solides par certains orifices et d'accroître ainsi l'homogénéité de la répartition de ces particules par les éléments déflecteurs.

Il est commode et souvent plus sûr, dans certains sites industriels, comme les raffineries, d'utiliser comme moyens de rotation, des moteurs alimentés par un gaz comprimé, qui, dans la plupart des cas sera de l'air comprimé, mais qui pourrait être également de l'azote, un gaz rare, du gaz carbonique ou tout autre gaz ou mélange de gaz, connu en soi. Il est alors possible de profiter judicieusement de l'air évacué du moteur pour le diriger à l'aide de moyens appropriés vers l'extérieur de la cheminée, de façon à ce qu'il aide à l'éjection des particules par les orifices latéraux.

Cette disposition permet d'effectuer un remplissage correct d'enceintes de grands diamètres à grand débit, tout en minimisant les éventuels effets d'attrition des particules. En effet, dans le cas des enceintes de grand diamètre, il peut être nécessaire de faire tourner les éléments déflecteurs à grande vitesse pour que l'effet de pluie homogène recherché couvre toute la section de l'enceinte à charger. Le débit d'air d'évacuation du moteur mentionné ci-dessus permet, pour une enceinte de diamètre donné, d'utiliser un moteur de moindre puissance et de faire tourner moins vite les éléments déflecteurs qui ne subissent plus le poids de la fraction du débit de particules qui est poussée par l'air d'évacuation; cette disposition permet donc de minimiser l'attrition des particules.

Comme décrit dans le brevet FR N° 2431449 précité, ces éléments déflecteurs pourront avantageusement être constitués de lanières ou bandes d'un matériau semi-rigide.

La titulaire a cependant constaté que des bandes de forme générale rectangulaire, en rotation autour de l'axe, n'assurent une distribution parfaitement efficace des particules que lorsque l'alimentation en particules est centrale. En effet, l'écartement entre deux bandes est proportionnel à leur distance à l'axe, et la distance séparant l'extrémité libre de deux bandes contiguës est donc beaucoup plus grande que celle qui sépare l'extrémité par laquelle elles sont articulées sur l'arbre ou sur l'ossature solidaire de celui-ci.

Par conséquent, avec une alimentation fournie par un orifice latéral, un ou plusieurs étages d'éléments déflecteurs souples seront de préférence constitués par des lanières ou bandes ayant une forme telle que leur largeur soit suffisante pour favoriser la déflexion des particules qui tombent à une certaine distance de l'axe central. Ces bandes ou lanières ou au moins celles qui seront placées au premier étage pourront avoir, par exemple, une forme sensiblement trapézoïdale, ou seront élargies à partir d'une distance à l'axe qui sera fonction de l'orifice latéral précédemment décrit.

Les dessins annexés, qui n'ont pas de caractère limitatif, illustrent la mise en œuvre de l'invention :

Sur ces dessins:

La fig. 1 est une vue en perspective d'une forme de réalisation du dispositif de répartition, avec les déflecteurs souples en position d'utilisation;

La fig. 2 est une vue en perspective d'une autre forme de réalisation du même dispositif, utilisant cette fois en appoint l'air comprimé d'évacuation du moteur;

Les fig. 3 et 4 sont des vues schématiques d'un silo, respectivement en coupe verticale et de dessus, illustrant l'application de ce dispositif au remplissage d'un silo à section carrée, comportant un unique orifice de remplissage excentré par rapport à son axe de symétrie.

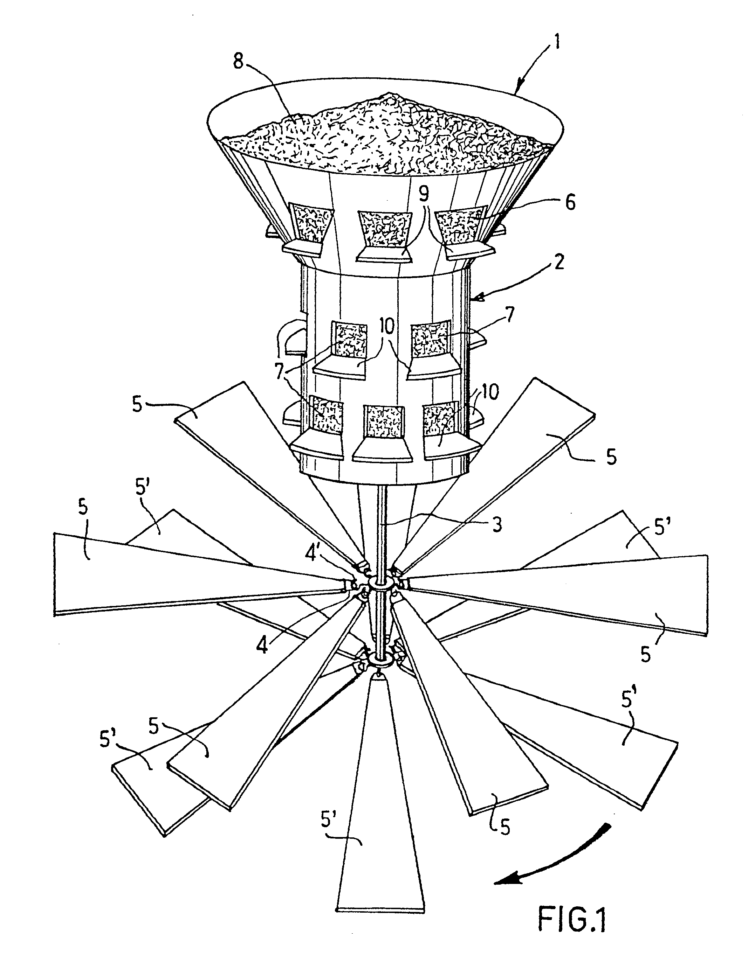

On se référera d'abord à la fig. 1, qui représente une trémie de remplissage tronconique 1, formant entonnoir, munie à sa base d'une cheminée d'évacuation cylindrique 2. Dans la cheminée 2 est logé un moteur électrique ou pneumatique (non représenté) de petites dimensions, entraînant par un arbre 3, coaxial à la cheminée 2, au moins deux étages d'éléments déflecteurs souples 5, 5', en forme de bande, dont une extrémité est ici articulée par des anneaux 4 sur des crochets 4' portés par l'arbre 3, comme décrit au brevet FR N° 2431449 précité.

Conformément à l'invention, la trémie 1 et la cheminée 2 comportent des ouvertures latérales, respectivement 6 et 7, destinées à diriger une partie de la charge 8 de particules solides contenue dans la trémie 1 vers la partie centrale et l'extrémité des déflecteurs 5, 5', sur lesquels elles rebondissent vers l'extérieur, pour alimenter sous forme d'une pluie homogène et dense l'ensemble de l'enceinte équipée du dispositif.

Les ouvertures 6 et 7 peuvent avoir toute forme et toute position relative sur le pourtour de la trémie 1 et de la cheminée 2 et être modulables en forme et en débit. Leurs dimensions peuvent être quelconques, les ouvertures les plus larges étant tournées vers les parties de l'enceinte que l'on désire alimenter préférentiellement, par exemple vers les zones les plus éloignées de l'axe du dispositif.

Afin d'orienter le jet des particules solides et d'éviter qu'elles ne tombent verticalement en sortant des ouvertures 6 et 7, selon une caractéristique de la présente invention, un volet formant auvent 9, respectivement 10, et dirigé vers l'extérieur, est disposé à la base de ces ouvertures; ces volets peuvent avoir n'importe quelle forme ou inclinaison.

Un dispositif de ce type pourra avoir, par exemple, les dimensions suivantes, en mm:
— grand diamètre de la trémie 1 : 600,
— hauteur de la trémie 1 : 200,
— diamètre de la cheminée 2 : 340,
— hauteur de la cheminée 2 : 500,
— nombre des ouvertures 6 : 9,
— dimensions des ouvertures 6 : 80 × 100,
— nombre des ouvertures 7 : 16,
— dimensions des ouvertures 7 : 90 × 100,
— nombre des déflecteurs 5 : 10,
— dimensions des déflecteurs 5 : 700 × 150 × 70.

Un tel dispositif de répartition a été utilisé pour remplir un silo de blé cylindrique, d'un diamètre de 5 m et d'une hauteur de 7 m à un débit de 40 t/h, en entraînant les déflecteurs 5 à une vitesse de 120 t/min. Le niveau des particules s'est élevé régulièrement tout au long du remplissage en restant sensiblement horizontal, sans aucune inégalité prononcée. Dans ces conditions, le gain de charge du silo a été de 10% par rapport au système classique de remplissage.

Ainsi qu'il a été indiqué ci-dessus, en ajustant le nombre, les dimensions et les positions relatives des ouvertures 6 et 7 de la trémie 1 et de la cheminée 2, il est possible de distribuer préférentiellement les particules solides par ces ouvertures vers certaines zones de l'enceinte, pour effectuer un chargement dense et homogène de celle-ci, même si elle n'a pas une symétrie de révolution.

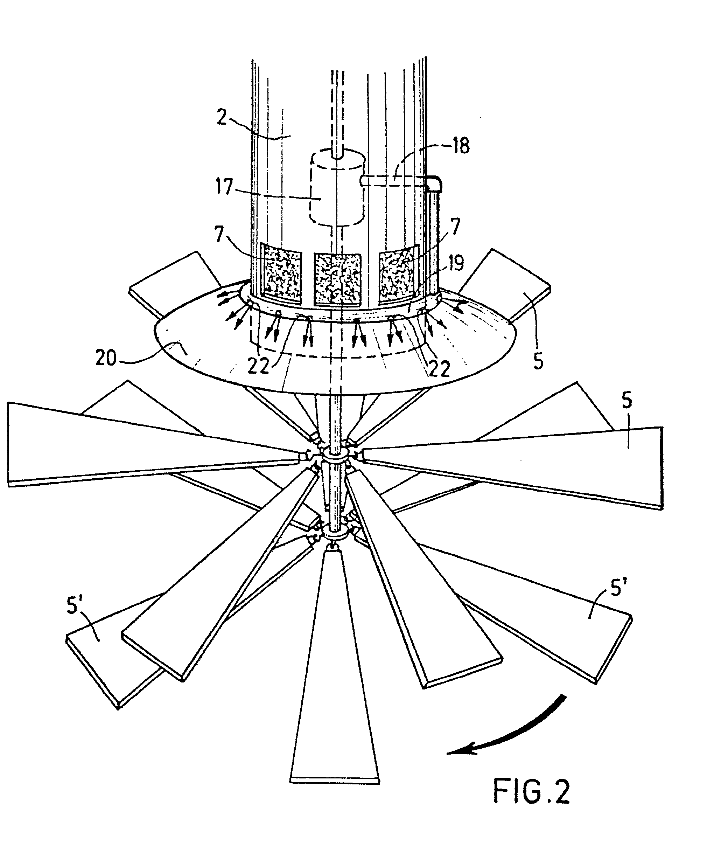

La fig. 2 représente une forme de réalisation du dispositif utilisant, comme moyen d'entraînement en rotation des éléments déflecteurs souples 5 et 5', un moteur à air comprimé 17. Le dispositif ne montre qu'une série d'ouvertures 7 ménagées au bas de la cheminée 2, laquelle est munie d'un auvent conique 20, jouant le même rôle que les volets 9 et 10 de la fig. 1. L'air évacué du moteur 17 ou le gaz susceptible de le remplacer est dirigé du tube 18 vers un autre tube 19 en forme de tore, disposé autour de la cheminée 2 au niveau de jonction de l'auvent déflecteur et de la cheminée. Ce tube 19 est percé à sa base inférieure d'une série de petits trous 22 dirigés de telle sorte que le gaz qui en sort ait une direction parallèle à la pente du déflecteur conique. A la place du tube 19, on peut aussi utiliser une buse circulaire d'échappement du gaz comprimé, ou tout autre moyen d'évacuation du gaz connu en soi.

Ainsi, les particules solides qui s'écoulent par les ouvertures latérales glissent le long de l'auvent 20 et, au lieu de tomber avec une vitesse initiale pratiquement nulle, se trouvent éjectées à une vitesse dépendant du débit de gaz d'admission, loin de l'axe de l'enceinte, grâce aux multiples jets de gaz qui jaillissent des petits trous 22 du tube 19.

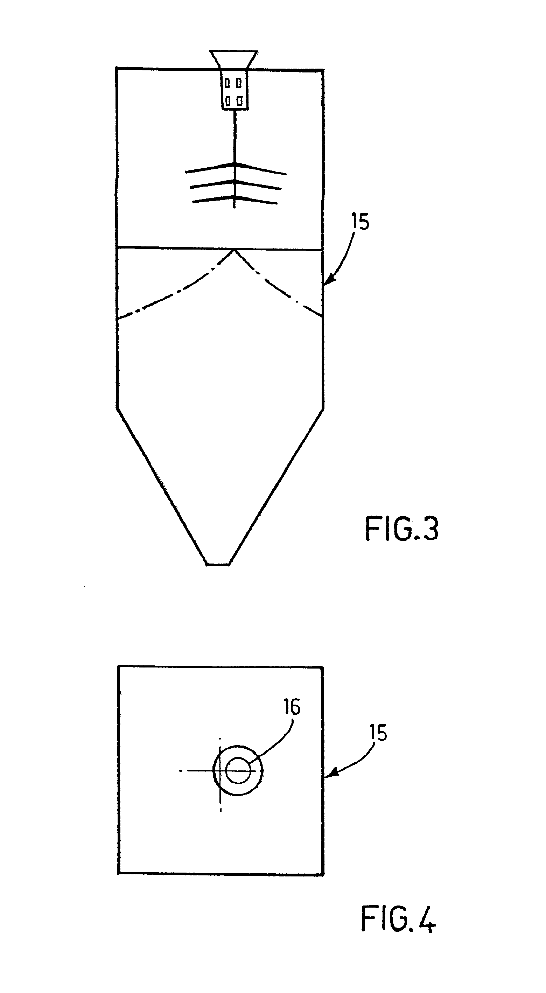

Les fig. 3 et 4 illustrent l'application du dispositif conforme à l'invention au remplissage d'une telle enceinte, en l'occurrence un silo 15 à section carrée, de 4,6 m de côté, dont la partie supérieure comporte un unique orifice de remplissage 16 décalé par rapport à l'axe de symétrie du silo.

Alors qu'avec un système de remplissage classique le niveau de remplissage obtenu a la forme représentée en traits interrompus sur la fig. 2, c'est-à-dire s'abaisse latéralement à partir d'un sommet situé sensiblement à l'aplomb de l'orifice 16, le dispositif conforme à l'invention permet d'obtenir un remplissage uniforme et homogène, au niveau sensiblement horizontal, figuré ici en trait plein, avec un gain de remplissage de 10%, à un débit de 20 t/h. On ne note aucune accumulation de matière dans les angles du silo.

Le dispositif conforme à l'invention est donc particulièrement bien adapté au chargement dense, par distribution en pluie, d'enceintes de grandes dimensions (3 à 20 m de diamètre) ou de section non circulaire, ou encore d'enceintes pourvues d'un unique orifice de remplissage excentré par rapport à leur axe de symétrie.

On notera que le dispositif se présente sous la forme d'un véritable module de petites dimensions et qu'il peut donc équiper sans problème des enceintes comportant un orifice étroit de remplissage.

Les exemples qui suivent visent à illustrer l'invention. Ils n'ont pas de caractère limitatif.

*Exemple 1 :*

Ce premier exemple vise à comparer le dispositif selon l'invention avec celui faisant l'objet du brevet FR N° 2431449.

Un silo cylindrique, à fond conique, d'un diamètre de 5 m, et d'une hauteur de 7 m a été chargé en blé à un débit d'environ 40 t/h, en utilisant un dispositif du type de celui décrit dans le brevet antérieur FR N° 2431449. Ce dispositif était principalement constitué d'une cheminée de 340 mm de diamètre et de 500 mm de hauteur, munie à sa base d'un diaphragme de 170 mm de diamètre et ne comprenait pas d'ouvertures latérales. De plus, l'organe tournant était constitué de 24 lanières rectangulaires en caoutchouc semi-rigide, d'une largeur de 50 mm, réparties en trois étages, le premier comprenant huit lanières de 500 mm de longueur et les deux autres des lanières de 1000 mm.

Avec le dispositif ainsi décrit, le lit de grains de blé ne s'est pas élevé régulièrement au cours du chargement et le profil final de sa surface supérieure a accusé au centre un creux d'une profondeur de 70 cm environ, entouré d'un bourrelet circulaire allant en pente jusqu'à la paroi du silo sur une profondeur d'environ 1,60 m. Ce mauvais profil traduit une distribution des grains non satisfaisante et correspond à une densité de chargement qui n'est pas à son maximum.

La titulaire a procédé sur le même silo à un autre essai de chargement, mais avec un dispositif du type de celui qui fait l'objet de la présente invention, c'est-à-dire avec une trémie et une cheminée munies d'ouvertures latérales et avec un organe tournant constitué de 24 lanières en caoutchouc, réparties en trois étages de huit.

L'étage le plus bas comprenait des lanières de forme rectangulaire de 50×500 mm et les deux autres des lanières trapézoïdales, le trapèze ayant pour bases 50 et 150 mm et pour hauteur 800 mm.

Avec ce deuxième dispositif, le lit de grains de blé s'est élevé régulièrement en restant sensiblement plan au cours du chargement. Cette bonne distribution des grains s'est traduite par une densité de chargement plus élevée de 10% que celle obtenue avec un remplissage en vrac par le système classique.

*Exemple 2 :*

Un autre silo à fond conique, mais de section carrée, de 4,6 m de côté environ et 12 m de hauteur, a été chargé avec de l'orge.

Avec un remplissage classique en vrac, la surface supérieure du lit présentait un cône formant un angle d'environ 27° par rapport à l'horizontale et correspondant à l'angle du talus naturel de l'orge.

Un deuxième essai de remplissage a été effectué avec un dispositif selon la présente invention du type de celui décrit dans la seconde partie de l'exemple 1, les différences étant les suivantes :
— hauteur des ouvertures: 68 mm,
— diamètre du diaphragme: 100 mm,
— trois étages de huit lanières trapézoïdales de 70×150×850 mm.

Avec ce dispositif et malgré la section carrée du silo, le lit de grains s'est élevé régulièrement au cours du chargement, tout en restant sensiblement plan. En particulier, on n'a noté aucune accumulation de grain dans les angles du silo.

Par rapport à un remplissage par voie classique (vrac), le gain obtenu sur la densité de chargement s'est élevé à environ 10%.

*Exemple 3 :*

Dans l'industrie chimique et pétroléochimique, on rencontre des réacteurs catalytiques qui ne sont munis à leur sommet que d'un trou d'homme, dont l'axe est décalé par rapport à celui des réacteurs et par lequel ont les remplit en catalyseur solide.

Pour de tels réacteurs, le remplissage classique à l'aide d'une manche passant par l'orifice décentré se traduit par la formation d'un cône non symétrique, dont le sommet est à l'aplomb de l'axe de l'orifice et dont l'angle est égal à l'angle de talus naturel du catalyseur chargé.

L'emploi, pour le remplissage de ces réacteurs, du dispositif du type de celui décrit dans le brevet FR N° 2431449 et rappelé dans l'exemple 1 (cheminée non munie d'ouvertures latérales, lanières de forme rectangulaire), apporte une certaine amélioration, en ce sens que le cône est moins accentué et qu'un gain de quelques unités pour cent, mais inférieur à 10%, est noté sur la densité de chargement.

La titulaire a procédé, à l'aide d'un dispositif du type de celui qui fait l'objet de la présente invention, au remplissage d'un réacteur de diamètre 3,4 m, de hauteur environ 4 m, muni d'un trou d'homme de diamètre 500 mm, dont l'axe est à 570 mm de l'axe du réacteur.

Le dispositif centré sur l'axe du trou d'homme était constitué d'une cheminée de diamètre 240 mm, de hauteur 500 mm, munie à sa base d'un diaphragme de diamètre 100 mm, et présentant cinq ouvertures rectangulaires de dimensions 30×40 mm, ménagées toutes les cinq sur la paroi latérale d'un même côté par rapport à un diamètre de la section.

L'organe tournant était constitué d'un étage de huit lanières trapézoïdales de dimensions 50×120×400 mm.

En orientant judicieusement ces ouvertures de manière que les jets de catalyseur qui en jaillissent alimentent par l'intermédiaire des éléments déflecteurs les zones du réacteur les plus éloignées de l'axe du trou d'homme, on obtient une distribution de grains de catalyseur homogène sur toute la section du réacteur et qui fait pratiquement disparaître le cône observé dans les cas cités ci-dessus.

Cette bonne distribution se traduit par un gain de densité de chargement compris entre 10 et 15%, par rapport au chargement classique par manche.

**Revendications**

1. Dispositif de remplissage en lit dense d'une enceinte avec un solide sous forme particulaire, du type comprenant une trémie d'alimentation (1),

une cheminée d'évacuation (2) solidaire de ladite trémie, et un équipage mobile (4) disposé en aval de l'orifice de sortie de ladite cheminée, cet équipage mobile comprenant un arbre (3) entraîné en rotation par un moyen moteur et des éléments déflecteurs souples (5, 5') de faible dureté, articulés sur ledit arbre (3) ou sur une ossature rigidement solidaire de celui-ci, de manière à s'en écarter angulairement sous l'effet de la force centrifuge lorsqu'il est entraîné en rotation, ce dispositif étant caractérisé en ce qu'au moins un orifice (6, 7) d'évacuation en direction des éléments déflecteurs (5, 5') est pratiqué dans la paroi latérale de ladite trémie (1) et/ou de ladite cheminée (2).

2. Dispositif selon la revendication 1, caractérisé en ce que lesdits éléments déflecteurs (5, 5') s'élargissent en direction de l'extrémité opposée à celle par laquelle ils sont articulés sur ledit arbre (3).

3. Dispositif selon la revendication 2, caractérisé en ce qu'au moins les éléments déflecteurs (5, 5') de l'étage le plus élevé s'élargissent en direction de l'extrémité opposée à celle par laquelle ils sont articulés sur ledit arbre (3).

4. Dispositif selon l'une des revendications 1 et 2, caractérisé en ce que lesdits éléments déflecteurs (5, 5') sont constitués de bandes ayant sensiblement la forme d'un trapèze isocèle.

5. Dispositif selon l'une des revendications 1 à 4, caractérisé en ce qu'en vue du remplissage à grand débit en lit dense d'une enceinte avec des particules, lesdits orifices (6, 7) de la trémie (1) et/ou de la cheminée (2) sont répartis régulièrement autour de l'axe dudit arbre (3).

6. Dispositif selon l'une des revendications 1 à 4, caractérisé en ce qu'en vue du remplissage d'une enceinte à section non circulaire ou à trou de remplissage excentré, lesdits orifices (6, 7) de la trémie (1) et/ou de la cheminée (2) sont répartis de façon non régulière autour de l'axe dudit arbre (3).

7. Dispositif selon l'une des revendications 1 à 6, caractérisé en ce que des volets (9, 10) formant auvents font saillie vers l'extérieur à la base desdits orifices (6, 7).

8. Dispositif selon la revendication 7, caractérisé en ce que les volets (9, 10) sont reliés entre eux pour former un seul et même auvent circulaire (20) autour de la cheminée (2).

9. Dispositif selon la revendication 8, caractérisé en ce qu'un gaz comprimé est éjecté autour de la cheminée (2) au niveau de la jonction entre les volets ou l'auvent circulaire (20) et ladite cheminée.

10. Dispositif selon la revendication 9, caractérisé en ce que le gaz comprimé est éjecté par une buse circulaire ou par un tuyau (19) percé de trous (22) disposé circulairement autour de la cheminée.

11. Dispositif selon l'une des revendications 8 à 10, caractérisé en ce que le gaz comprimé est constitué par de l'air, de l'azote, un gaz rare, du gaz carbonique, ou leur mélange.

12. Dispositif selon l'une des revendications 8 à 11, caractérisé en ce que le gaz comprimé provient de l'évacuation du moteur (17) d'entraînement de l'arbre sur lequel sont articulés les éléments déflecteurs souples (5, 5').

13. Application d'un dispositif selon l'une des revendications 1 à 12 au remplissage à grand débit d'une enceinte.

14. Application selon la revendication 13, caractérisée en ce que le débit de remplissage est compris entre 5 et 250 t/h.

15. Application d'un dispositif selon la revendication 6, au remplissage d'une enceinte cylindrique à section non circulaire, notamment à section carrée, ou au remplissage d'une enceinte cylindrique à trou de remplissage excentré par rapport à l'axe de cette enceinte.

## Patentansprüche

1. Vorrichtung zum Füllen eines Raumes mit einem teilchenförmigen Feststoff in einem dichten Bett mit einem Speisetrichter (1), einem mit demselben verbundenen Entleerungsschacht (2) und einer hinter der Ausgangsöffnung des letzteren angeordneten beweglichen Einrichtung, welche eine mittels eines Antriebes drehbare Welle (3) und biegsame Deflektorelemente (5, 5') geringer Härt aufweist, die an der Welle (3) oder einem mit derselben starr verbundenen Gerüst angelenkt sind, so dass sie sich aufgrund der Wirkung der Zentrifugalkraft von derselben winkelig wegspreizen, wenn sie gedreht wird, dadurch gekennzeichnet, dass in der Seitenwand des Speisetrichters (1) und/oder des Entleerungsschachtes (2) mindestens eine Entleerungsöffnung (6, 7) in Richtung der Deflektorelemente (5, 5') ausgebildet ist.

2. Vorrichtung nach Anspruch 1, dadurch gekennzeichnet, dass die Deflektorelemente (5, 5') sich in Richtung des Endes verbreitern, welches dem Ende gegenüberliegt, mit dem sie an der Welle (3) angelenkt sind.

3. Vorrichtung nach Anspruch 2, dadurch gekennzeichnet, dass wenigstens die Deflektorelemente (5, 5') der höchsten Etage sich in Richtung des Endes verbreitern, welches dem Ende gegenüberliegt, mit dem sie an der Welle (3) angelenkt sind.

4. Vorrichtung nach Anspruch 1 oder 2, dadurch gekennzeichnet, dass die Deflektorelemente (5, 5') aus Bändern bestehen, welche im wesentlichen die Gestalt eines gleichschenkligen Trapezes aufweisen.

5. Vorrichtung nach einem der Ansprüche 1 bis 4, dadurch gekennzeichnet, dass zum Füllen eines Raumes mit Teilchen in einem dichten Bett mit grossem Durchsatz die Entleerungsöffnungen (6, 7) des Speisetrichters (1) und/oder des Entleerungsschachtes (2) um die Achse der Welle (3) herum gleichmässig verteilt sind.

6. Vorrichtung nach einem der Ansprüche 1 bis 4, dadurch gekennzeichnet, dass zum Füllen eines Raumes mit nicht kreisförmigem Querschnitt oder mit exzentrischem Fülloch die Entleerungsöffnungen (6, 7) des Speisetrichters (1) und/oder des Entleerungsschachtes (2) um die Achse der Welle (3) herum ungleichmässig verteilt sind.

7. Vorrichtung nach einem der Ansprüche 1 bis 6, dadurch gekennzeichnet, dass an der Basis der Entleerungsöffnungen (6, 7) Vordächer bildende Klappen (9, 10) nach aussen vorspringen.

8. Vorrichtung nach Anspruch 7, dadurch gekennzeichnet, dass die Klappen (9, 10) miteinander verbunden sind, um ein einziges kreisförmiges Vordach (20) um den Entleerungsschacht (2) herum zu bilden.

9. Vorrichtung nach Anspruch 8, dadurch gekennzeichnet, dass ein komprimiertes Gas um den Entleerungsschacht (2) herum auf dem Niveau der Verbindungsstelle zwischen den Klappen oder dem kreisförmigen Vordach (20) und dem Entleerungsschacht ausgestossen wird.

10. Vorrichtung nach Anspruch 9, dadurch gekennzeichnet, dass das komprimierte Gas mittels einer kreisförmigen Düse oder eines mit Löchern (22) versehenen, kreisförmig um den Entleerungsschacht herum angeordneten Rohres (19) ausgestossen wird.

11. Vorrichtung nach einem der Ansprüche 8 bis 10, dadurch gekennzeichnet, dass das komprimierte Gas aus Luft, Stickstoff, einem Edelgas, Kohlendioxyd oder einem Gemisch davon besteht.

12. Vorrichtung nach einem der Ansprüche 8 bis 11, dadurch gekennzeichnet, dass das komprimierte Gas von der Ausströmung des Antriebsmotors (17) der Welle stammt, an welcher die biegsamen Deflektorelemente (5, 5') angelenkt sind.

13. Verwendung der Vorrichtung nach einem der Ansprüche 1 bis 12 zum Füllen eines Raumes mit grossem Durchsatz.

14. Verwendung nach Anspruch 13, dadurch gekennzeichnet, dass der Fülldurchsatz zwischen 5 und 250 t/h liegt.

15. Verwendung der Vorrichtung nach Anspruch 6 zum Füllen eines zylindrischen Raumes mit nicht kreisförmigem Querschnitt, insbesondere mit viereckigem Querschnitt, oder zum Füllen eines zylindrischen Raumes mit bezüglich der Achse desselben exzentrischem Fülloch.

## Claims

1. A device for filling a container with a solid in particulate form and in a compact layer, of the type comprising a feed hopper (1), an outlet chute (2) securely connected to said hopper, and a movable mechanism (4) disposed downstream of the outlet orifice of said chute, this movable mechanism comprising a shaft (3) caused to rotate by a drive means and flexible deflector elements (5, 5') with a low degree of hardness, which are hinged to said shaft (3) or on a frame rigidly connected thereto so as to be moved angularly away therefrom under the action of centrifugal force when it is caused to rotate, this device being characterised in that at least one orifice (6, 7) for discharge towards the deflector elements (5, 5') is provided in the lateral wall of said hopper (1) and/or of said chute (2).

2. A device according to Claim 1, characterised in that said deflector elements (5, 5') are widened towards the end opposite that at which they are hinged to said shaft (3).

3. A device according to Claim 2, characterised in that at least the deflector elements (5, 5') of the uppermost tier are widened towards the end opposite that at which they are hinged to said shaft (3).

4. A device according to either of Claims 1 and 2, characterised in that said deflector elements (5, 5') are formed by strips having substantially the shape of an isosceles trapezium.

5. A device according to one of Claims 1 to 4, characterised in that, for the purpose of filling a container with particles in a compact layer at a high rate of flow, said orifices (6, 7) of the hopper (1) and/or of the chute (2) are regularly spaced about the axis of said shaft (3).

6. A device according to one of Claims 1 to 4, characterised in that, for the purpose of filling a container of non-circular section or with an eccentric filling aperture, said orifices (6, 7) of the hopper (1) and/or of the chute (2) are irregularly spaced about the axis of said shaft (3).

7. A device according to one of Claims 1 to 6, characterised in that flaps (9, 10) forming ledges project outwards from the base of said orifices (6, 7).

8. A device according to Claim 7, characterised in that the flaps (9, 10) are joined together to form a continuous circular ledge (20) around the chute (2).

9. A device according to Claim 8, characterised in that compressed gas is ejected around the chute (2) at the level of the connection between the flaps or circular ledge (20) and said chute.

10. A device according to Claim 9, characterised in that the compressed gas is ejected through a circular nozzle and through a pipe (19) perforated with holes (22) disposed in a circle around the chute.

11. A device according to one of Claims 8 to 10, characterised in that the compressed gas is air, nitrogen, a rare gas, carbon dioxide or a mixture thereof.

12. A device according to one of Claims 8 to 11, characterised in that the compressed gas originates from the exhaust of the motor (17) driving the shaft on which the flexible deflector elements (5, 5') are articulated.

13. Application of a device according to one of Claims 1 to 12 to the filling of a container at a high flow rate.

14. Application according to Claim 13, characterised in that the filling rate is between 5 and 250 t/h.

15. Application of a device according to Claim 6 to the filling of a cylindrical container of non-circular section, in particular of square section, or to the filling of cylindrical container with a filling aperture which is eccentric in relation to the axis of said container.

FIG.1

FIG.2

FIG.3

FIG.4